# EUROPEAN PATENT SPECIFICATION

(11) **EP 0 448 319 B1**
(45) Date of publication and mention of the grant of the patent: **02.08.1995**
(21) Application number: 91302297.6
(22) Date of filing: 18.03.1991
(51) Int. Cl.: H01S 3/03, H01S 3/038, H01S 3/07, H01S 3/081, H01S 3/0975

(54) **Laser system with multiple radial discharge channels**
Lasersystem mit mehreren radialen Entladungskanälen
Dispositif laser à décharge comprenant plusieurs canaux en configuration radiale

(30) Priority: 19.03.1990 US 495606; 14.02.1991 CA 36359
(43) Date of publication of application: 25.09.1991
(73) Proprietor: Seguin, Herb Joseph John, Edmonton Alberta, T6H OP6 (CA)
(72) Inventor: Seguin, Herb Joseph John, Edmonton Alberta, T6H OP6 (CA)
(74) Representative: Molyneaux, Martyn William

(56) References cited:
- DE-A- 2 608 830
- US-A- 355 758
- US-A- 4 050 036
- US-A- 4 813 052

## Description

### FIELD OF INVENTION

This invention relates to high powered laser systems, and in particular to multi-channelled laser systems.

### BACKGROUND AND SUMMARY OF THE INVENTION

High average power CW or pulsed carbon dioxide lasers, of the type useful in any meaningful materials processing application, have historically featured large volume discharges, cooled by massive forced convection. As a consequence, such lasers have invariably been characterized by a large physical size, incorporating a relatively complicated gas transport and heat-exchange system.

Due to the many and rapidly moving parts inherent in their design, these large machines have not only been costly to build and install, but in addition require considerable peripheral equipment, and frequent supervision to achieve proper operation. Because of these factors, they have proven to be unsuitable for a number of applications where mobility, weight, or freedom from service and operator intervention are prime considerations.

Thus, despite a number of impressive laser developments reported in the trade literature, it has become well recognized that to achieve widespread adoption of lasers for the processing of materials it will be necessary to develop more compact high powered laser systems, which are capable of prolonged operation in an industrial environment, without the need for frequent adjustment or maintenance.

The above is particularly true in robotic applications for flexible manufacturing, where portability is an additional constraint.

Being cognizant of this fact, a number of researchers have recently devoted considerable effort into the development of new laser geometries which conceivably could address this problem. In particular, research work on diffusion cooled R.F. excited lasers, of both wave-guide and strip-line or slab geometries, has demonstrated that useful power levels can be achieved from very small packages, without any form of gas transport.

Anticipated further advances in this particular art should raise the attainable power into the many hundreds of watt category, and perhaps even near the 1 kilowatt level. However, direct scaling of the approach into the MULTIKILOWATT range, as is desirable in many industrial situations, presents considerable difficulty.

Because of this fact, increasing attention is being focused on multiple beam systems, constructed with a number of identical waveguide discharge channels, optically coupled either individually or by a common resonator.

When the individual lasers in such a system operate independently their output radiation is non-phase coherent. Consequently, the diffraction limit and focusability of the resultant beam dces not benefit from the increased aperture of the assembly. Fortunately, coherent phase-locking of the individual gain sections has been demonstrated to provide a viable solution to this important problem.

The approaches thus far developed have been appropriate to parallel waveguide or tubular discharge sections, but not to slab gain geometries. The object of this patent application is therefore to teach the construction of a multichannel parallel-slot excitation and optical extraction geometry. The device has no moving parts and appears scalable well into the multikilowatt range, in a very small physical package. The basic technique is also applicable to a number of gas mixtures such as CO₂, CO, and Excimers; as well as to different discharge excitation processes utilizing different energy sources, such as R.F., microwaves and magpie, etc.

US-A-4 813 052 discloses a waveguide gas laser having a ridged dielectric substrate to form a gas filled region in which an electric discharge generates a lasing mode. This ridged waveguide configuration may be utilized in a circular guide structure.

According to the present invention there is provided a laser system having plural pairs of parallel electrodes defining plural narrow-gap discharge channels, cooling means attached to the electrodes for cooling the electrodes, excitation means attached to the electrodes for providing laser excitation energy to the electrodes, whereby application of laser excitation energy to the electrodes creates a laser plasma in the discharge channels, wherein:
the discharge channels are arranged about and extend radially from a common central axis; and have optical extraction means having a second central axis coinciding with the first common central axis disposed about the discharge channels for creating a common resonator mode for all of the discharge channels and for extracting laser energy from all of the discharge channels simultaneously.

In an embodiment of the laser system, the means for extracting the laser energy includes an optical resonator having a common unstable cavity mode and an annular output, and further includes an output compacting axicon mounted to receive the annular output.

In a further embodiment of the laser system, the discharge channels are mounted in a toric resonator.

In a still further embodiment of the laser system, the discharge channels are mounted in a retro-reflective toric unstable resonator, and may include means mounted in the output from the laser system for feeding back a portion of the output into the discharge channels.

In a still further embodiment of the laser system, the pairs of adjacent discharge channels are coupled to form ring resonators, and may itself be formed by a continuous double ridged waveguide and be excited by a plurality of microwave generators.

In a preferred embodiment of the laser system, the electrodes are connected alternately to one end electrode plate at one end of the laser system, and another at the other end.

In a further preferred embodiment of the laser system, each pair of parallel electrode faces consists of a first electrode face from a first electrode and a second electrode face from a second electrode, each of the first and second electrodes being triangular in cross-section, and in this embodiment may have the number of plural pairs of parallel electrode faces an even number and each triangular electrode defining the electrode faces for two adjacent discharge channels, one on each side of the triangular electrode.

### BRIEF DESCRIPTION OF THE FIGURES

There will now be described preferred embodiments of the invention, with reference to the figures by way of example, in which figures like references denote like features, and in which:
Fig. 1 is a perspective, partly cut away, of the basic multi-channel laser discharge geometry;
Fig. 2 is a cross-sectional schematic of an RF excited CO₂ laser with radial geometry;
Fig. 3 is a cross-sectional schematic of a microwave excited CO₂ laser with radial geometry;
Fig. 4 is a cross-sectional schematic of a MAGPIE CO₂ laser with radial geometry;
Fig. 5 is a schematic of an unstable multi-slot resonator for use with a laser having radial geometry;
Fig. 6 is a schematic of an injection locked unstable resonator for use with a laser with radial geometry;
Fig. 7 is a schematic of a toric resonator for use with a laser with radial geometry;
Fig. 8 is a schematic of a feedback toric resonator for use with a laser having radial geometry;
Fig. 9 is a schematic of a toric phase-locked-loop for use with a laser having radial geometry;
Fig. 10 is a schematic of an injection locked toric resonator for use with a laser with radial geometry;
Fig. 11 is a cross-sectional schematic of a radial discharge geometry having 24 gain slots;
Fig. 12 is a perspective of a 24 slot radial gain module;
Fig. 13 is a cross-sectional schematic of a radial discharge geometry having 48 discharge slots;
Fig. 14 is a perspective of a 48 slot radial geometry laser system;
Figs. 15 and 16 are cross-sectional schematics of radial discharge geometries having 60 and 100 gain slots respectively;
Fig. 17 is a perspective of a multikilowatt radial geometry laser constructed from 2 series connected gain modules;
Fig. 18 is a perspective, partially cut away, of a microwave excited CO₂ laser, not falling under the invention as claimed, showing in particular a ridged waveguide ring resonator geometry; and
Fig. 19 shows a perspective, partially cut away, of a microwave excited laser having a ridged waveguide structure and radial geometry.

### DESCRIPTION OF THE PREFERRED EMBODIMENTS

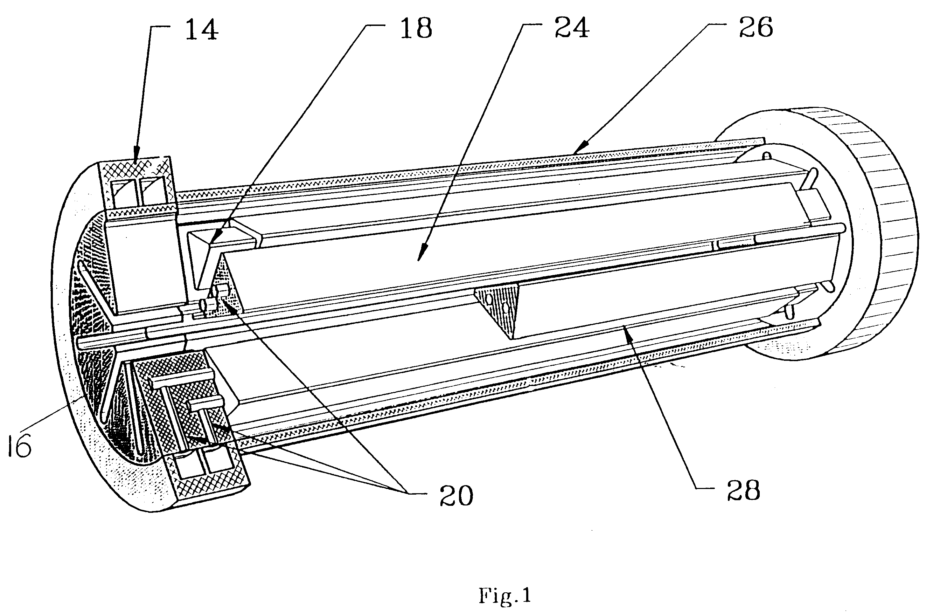

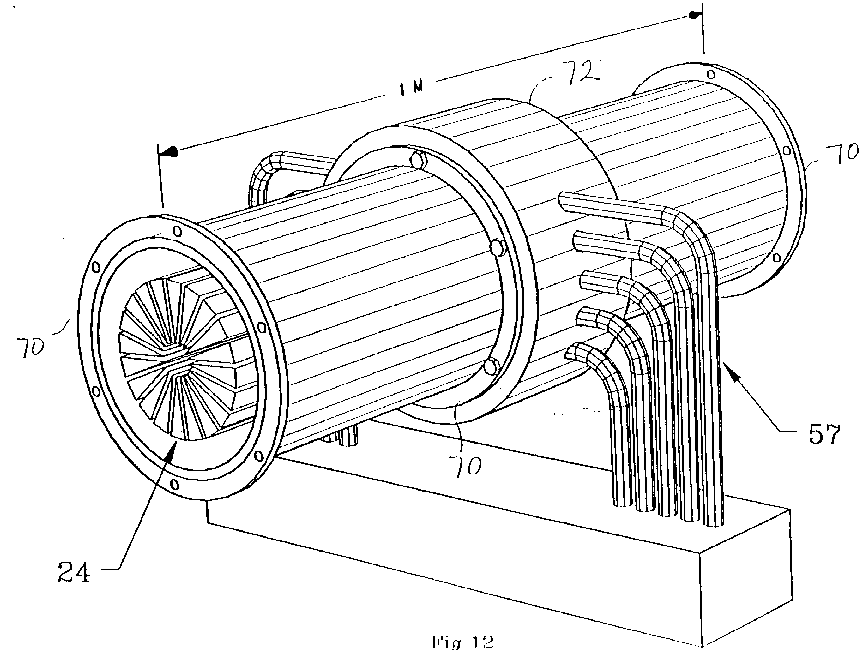

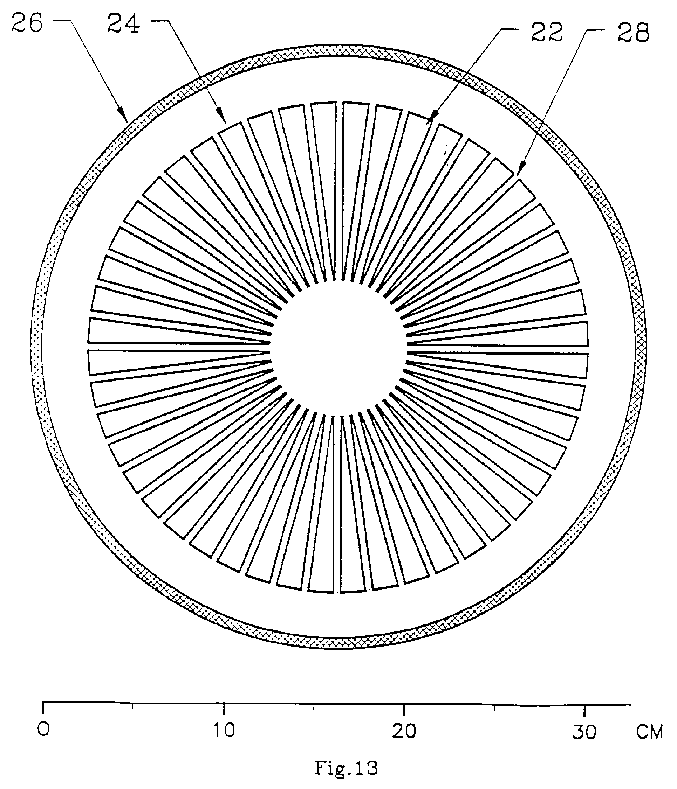

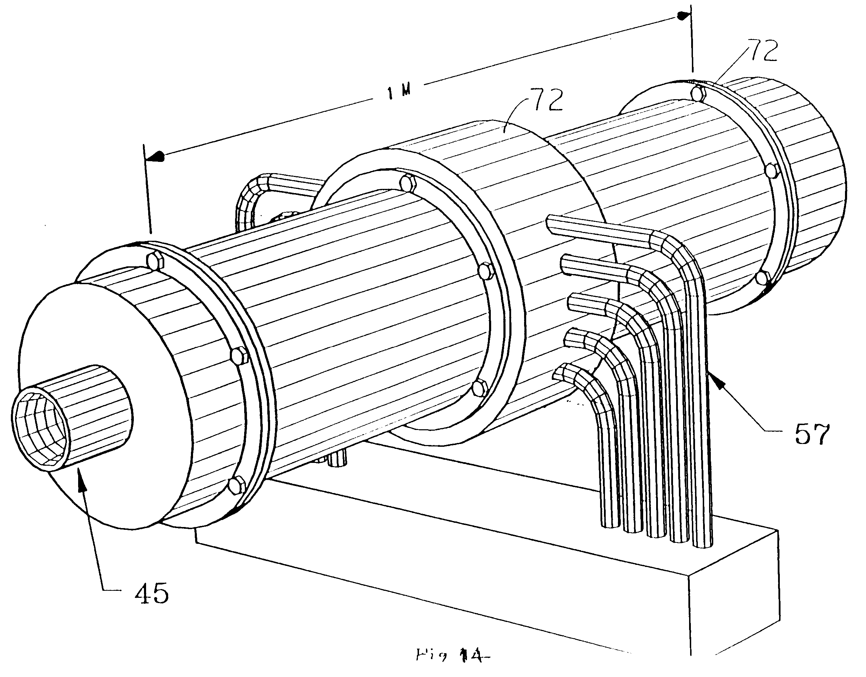

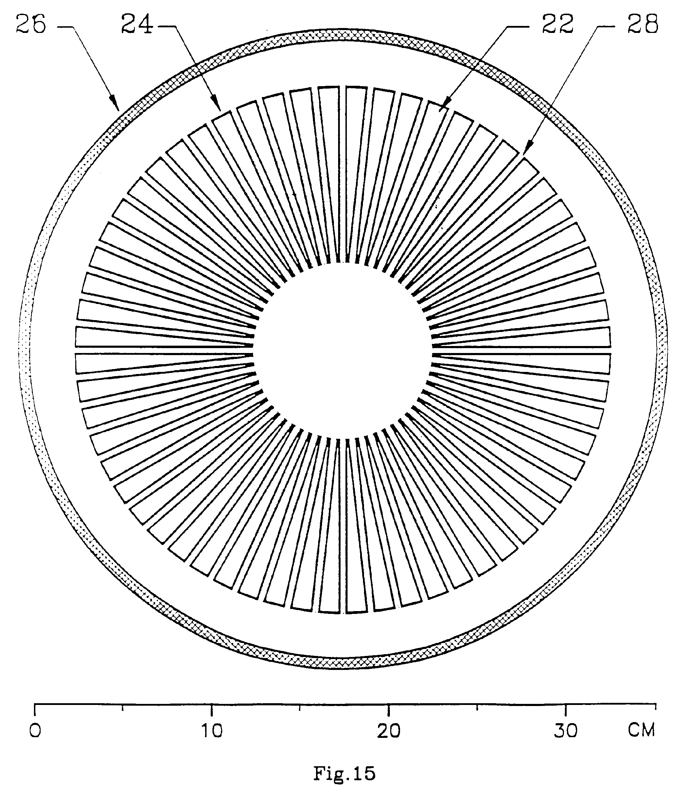

The basic multi-channel slot gain laser module configuration under discussion here is illustrated in Fig. 1. In essence the device is comprised of a number of parallel, narrow-gap, diffusion cooled, discharge channels mounted in a radial manner, similar to the Zodiac symbol. Although the prototype device of Fig. 1 was built with 8 parallel-slot gain sections, a much larger number can be used to further increase the power level from the device as described in more detail later with reference to Figs. 11 - 16.

The maximum number of parallel gain slots permissible in any given device is determined by the width of the individual slots and the overall diameter selected for the complete module.

As used here and in the claims, parallel refers to the geometric relation between adjacent electrodes forming the boundary of the laser discharge channel. Also, as used here and in the claims, narrow-gap, when used in reference to a discharge channel, refers to a channel having a perpendicular width substantially less than its transverse width and its axial length, such that a stable laser plasma may be formed in the discharge channel. In the case of a very large electrode-length to discharge-gap ratio, such as 500 or more, the laser beam within each individual gain slot would propagate in an optical-waveguide mode.

A further increase in available output power can be obtained by connecting a number of identical gain modules in series. In this manner it is believed that a laser of well over 100 kW output power can be obtained in a device having overall dimensions of about 30cm in diameter and 2 meters long.

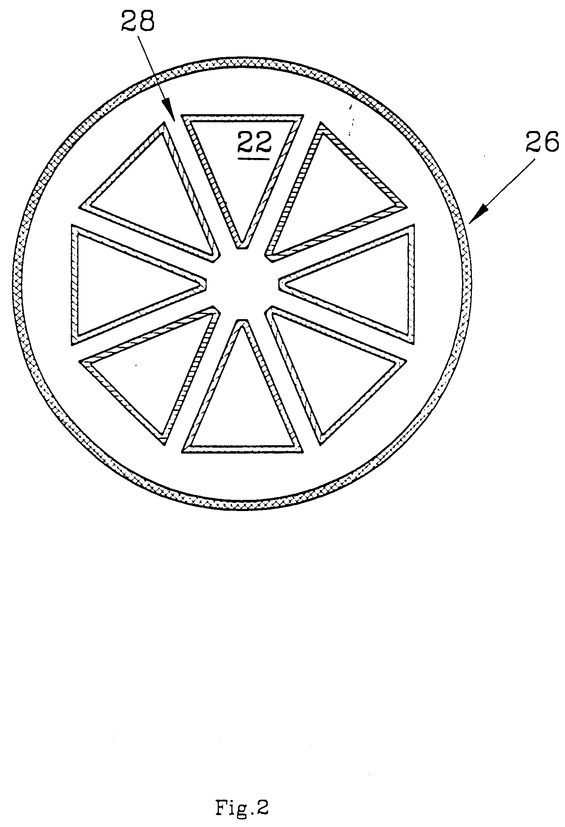

Referring to Fig. 1, the basic construction of the laser geometry can be clearly seen. The lasing region is a series of radially disposed parallel slots defined by the faces of electrodes 24. These electrodes may be made, for example, out of aluminum (possibly nickel plated), and their construction is well known in the art. The electrodes 24 are mounted in an electrode mounting end plate 16, one at each end of the electrodes. The electrodes 24 are enclosed within a hermetic enclosure 26. The excited slot-gain regions 28 extend between electrodes 24 and have exit regions machined within the electrode mounting end plate 16. Means for cooling of the electrodes 24 and end plate 16 is provided by the water cooling ring 14 and the interior water cooling tubes 20. The water cooling tubes 20 may also be used for alignment of the electrodes, using well known techniques, or separate water cooling tubes may be provided. As shown in Fig. 1, the electrodes 24 are solid apart from the tubes 20, but preferably, and as shown in Figs. 2, 3 and 4, the tubes are hollow as shown at 22, preferably being made from extruded aluminum or brass, and substantially the entire interior is available for water cooling.

The electrodes form plural pairs of parallel electrode faces, each pair of parallel electrode faces defining a narrow-gap discharge channel 28 and the pairs of parallel electrode faces are arranged about and extend radially from a first common central axis, which in several of the optical output configurations described later in this disclosure, coincides with the optical axis of the laser.

Means to be described later in relation to Figs. 2, 3 and 4 in particular are attached to the electrode faces for providing laser excitation energy to the electrode faces, whereby application of the laser excitation energy to the electrode faces creates a laser plasma in the discharge channels.

Optical extraction means having a second central axis coinciding with the first common central axis are disposed about the pairs of parallel electrode faces for creating a common resonator mode for all of the discharge channels and for extracting the laser energy from all of the discharge channels simultaneously.

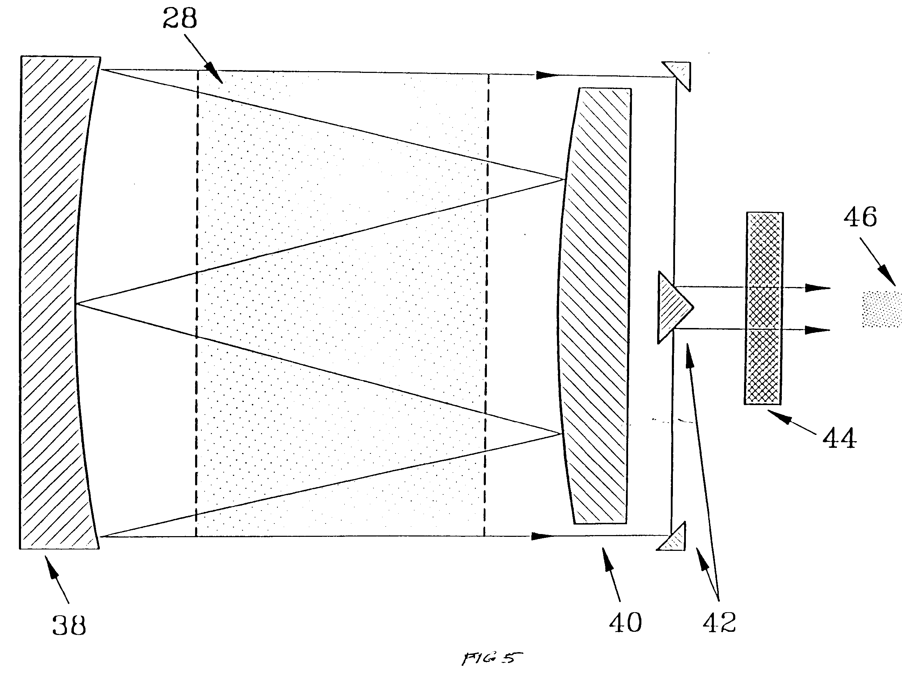

That is, the laser plasma forms in the excited slot gain regions (or discharge channels) 28 and optical energy may be extracted from the laser by any of several optical extraction methods. Particular extraction methods having specific utility here are described later with reference to Figs. 5, 6, 7, 8, 9 and 10.

Each slot gain region is driven either independently, or from a common power source. Figs. 2 through 4 represent different gas excitation methods and corresponding excitation means for the parallel gain slot regions that may be employed. These different excitation methods, such as RF, microwaves, DC, or MAGPIE, are described in greater detail in the following sections.

As shown, the electrodes are preferably triangular in cross-section since this provides the most efficient use of space.

### Optical Resonator Configurations

Laser energy extraction is afforded via the optical resonator configurations shown in Figs. 5 through 10. Here it is seen that all of the parallel slot gain sections share a common unstable cavity mode. The principles of unstable resonators are well known in the art and are described in: A.E. Segman, "Unstable Optical Resonators", Appl. Opt., Vol.13, pp.353-367, Feb. 1974.

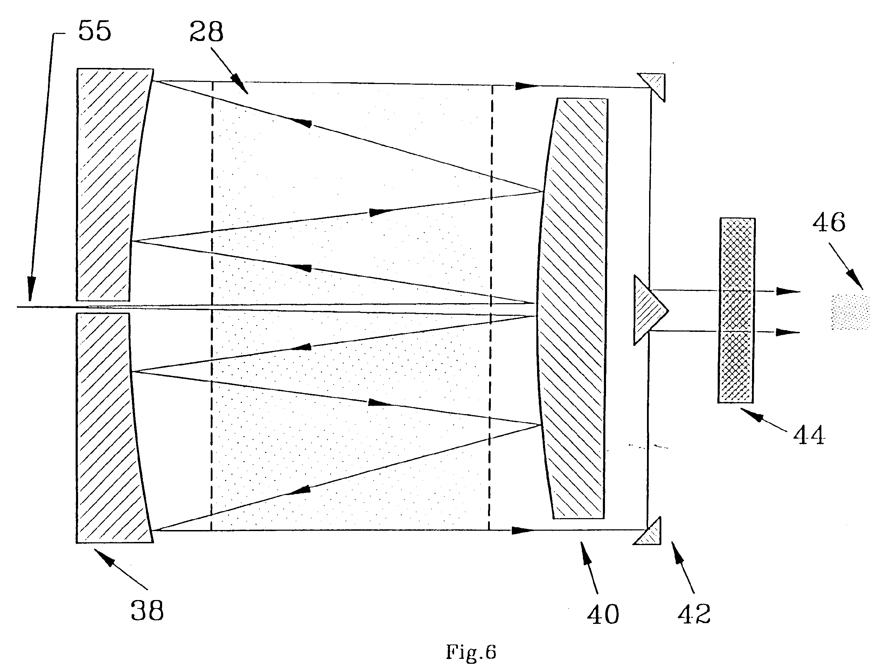

In the geometry of Fig. 5, phase coherent, over-the-edge output coupling is achieved from each slot and compacted into a single beam via an axicon. In Fig. 5, the excited slot gain regions or discharge channels 28 are shown schematically. The discharge channels 28 are substantially disposed within a concave unstable resonator secondary mirror 38 and a convex unstable resonator primary mirror 40. Radiation reflecting over the edge of the mirror 40 from the mirror 38 is compacted by the axicon 42 into an output beam 46 emerging from a ZnSe output window 44. The output compacting axicon 42 is formed by an annular inclined mirror in the path of the over-the-edge output, and a cone shaped mirror placed to receive the reflected radiation from the annular mirror. Construction of these mirrors is known in the art and need not be described further here. The individual gain slots in the unstable resonator of Fig. 5 may be injection phase locked, as shown in Fig. 6 by the injection of a laser beam 55 with known frequency into the discharge volume through a central hole in the unstable resonator mirror 38.

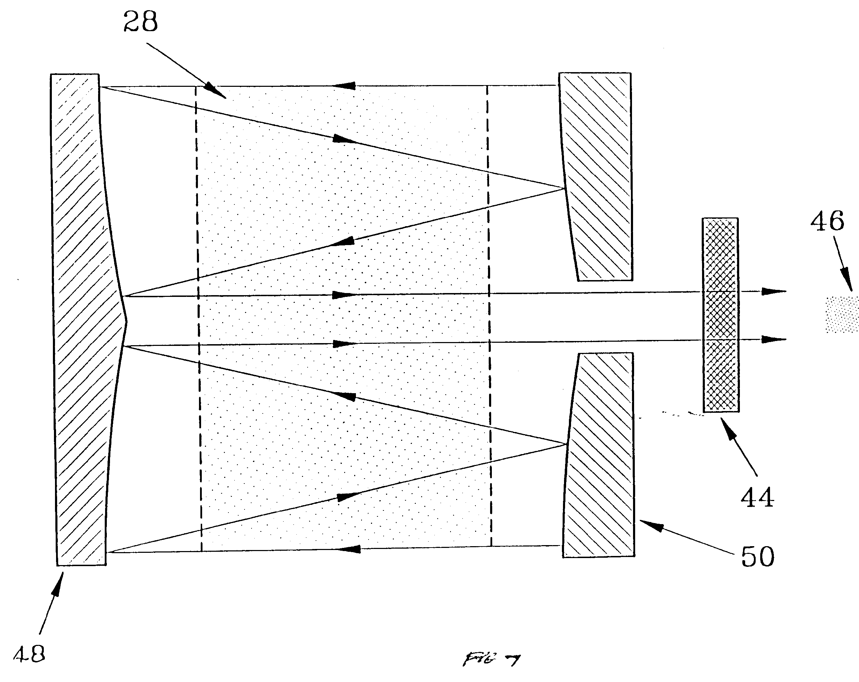

In the toric resonator configuration of Fig. 7 a combined but non-phase coherent laser output from each slot is obtained at the centerline. Toric resonators are well known in the art and described in: T.R. Ferguson, M.E. Smithers, "Toric unstable Resonators", Appl. Opt., Vol.23, pp.2122-2126, July, 1984.

As with Fig. 5, Fig. 7 shows a cross-section through a circular optical output extraction system. The discharge volume of the discharge channels 28 is shown schematically in the figure between the toric secondary mirror 48 and the toric primary mirror 50. Both mirrors are constructed in a manner known in the art. The output compacting axicon 42 used with the optical extraction system of Fig. 5 is not necessary with the toric unstable resonator designs since the output is already compacted and collimated by the design of the toric unstable resonator. The curvature of the mirrors is such that radiation traversing the discharge volume migrates towards the centre of the torus defined by the primary mirror 50. A hole in the centre of the primary mirror 50 allows the output beam to pass out through the ZnSe window to form the output beam 46.

The specific profile of the laser beam coupled out of this toric resonator system is determined by the aperture size in mirror 50. Specifically, if the aperture is larger than the inner free diameter of the gain slots, then individual beamlets emerge; one from each gain slot. However, if the coupling aperture is smaller, then the beamlets walk together to form a complete annulus before exiting the laser.

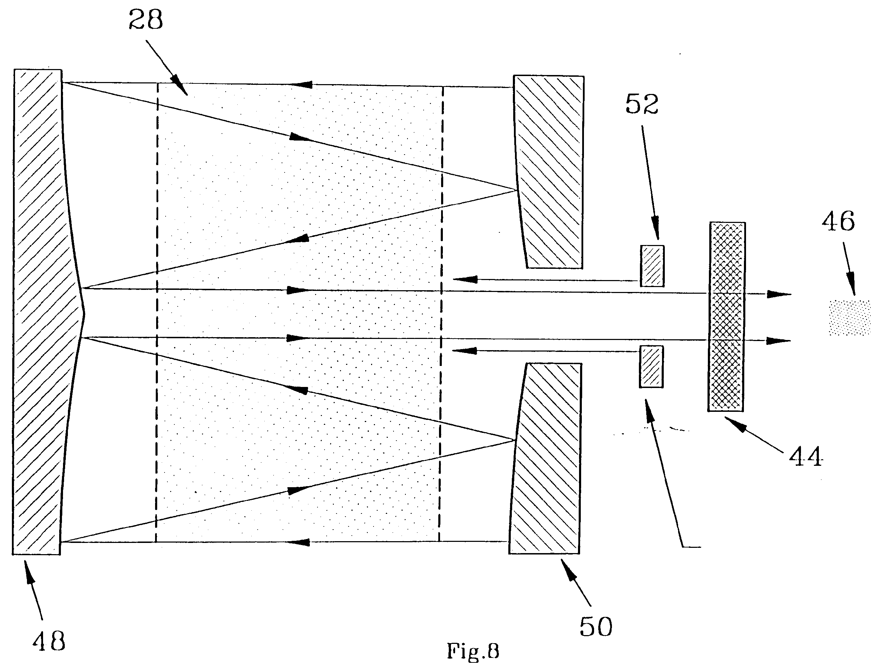

Fig. 8 illustrates an improved version of the toric resonator, known as the retro-reflected toric unstable resonator, in which a small percentage of on-axis optical feedback is applied to impart a measure of phase coherence to the resonator mode, thereby improving the focusability of the output beam. The retro-reflected toric unstable resonator is well known in the art and described in: A.E. Segman, 'LASERS', 1986, Chap. 23, University Science Books, Mill Valley, California.

The optical extraction system of Fig. 8 is the same as that shown in Fig. 7 except a portion of the output beam is intercepted by an annular mirror 52 known as a feedback skimmer. This feedback skimmer intercepts a small portion of the output beam and feeds it back into the discharge volume.

By providing a well defined positive feedback, phase-locked loop for the optical portion of each gain section, as depicted in Fig. 9, it is possible to achieve a fully phase coherent cavity mode, capable of delivering a very powerful beam of good optical quality. In Fig. 9, there is shown a feedback skimmer waxicon 53 located on the axis of the toric resonator at the central aperture of the toric primary mirror 50. The toric unstable resonator has a similar design to that shown in Figs. 7 and 8, that is, being formed by primary mirror 50 and secondary mirror 48. The secondary mirror 48 in Fig. 9 is formed slightly differently from the secondary mirror 48 shown in Figs. 7 and 8, having an inner annular mirror surface 51 and an outer annular mirror surface 54, each inclined towards each other to form a feedback waxicon. As with the feedback toric resonator design of Fig. 8, a portion of the output beam is intercepted by the feedback skimmer 53. While the feedback skimmer 52 shown in Fig. 8 has a reflecting surface perpendicular to the output beam, the feedback mirror 53 in Fig. 9 is mounted in relation to the output beam so that a portion of the output beam is directed towards the inner mirror 51 of the secondary mirror 48. From the inner annular mirror 48 of the feedback waxicon the radiation is directed to the outer annular mirror 54 and thence back into the radial discharge volume. Thus this feedback skimmer 53 reflects part of the optical output of the toric resonator back into the discharge volume.

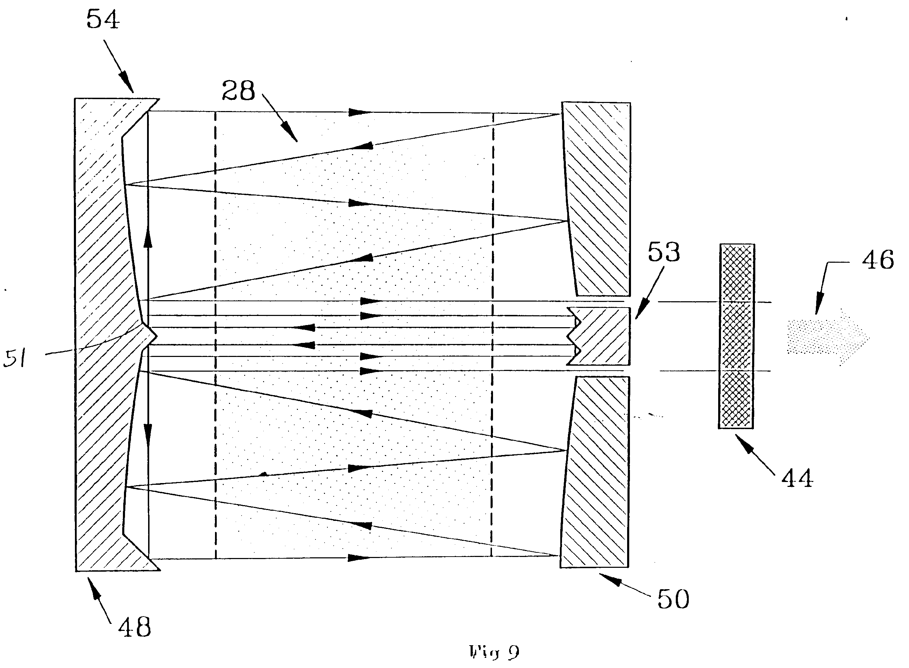

As an alternative, the toric resonator may be injection phase locked, via the injection into each slot of phase coherent master oscillator signals 55 derived from a separate laser. This approach is illustrated in Fig. 10. In Fig. 10, the injection beam 55 is directed by the axial feedback cone 56 towards the outer annular mirror surface 54 of the primary mirror 50, thence into the discharge volume. As such, an extremely small, light weight and efficient laser, in the power range up to many tens of kW may be built.

### Excitation Methods

As indicated above, the individual gain regions or slots may be excited in a number of ways, the most important being as follows:
1. RF - (radio frequency excited)
2. MICROWAVE - (microwave magnetron excitation).
3. DC or MAGPIE - (direct current or magnetically stabilized photo-initiated, impulse-enhanced, electrically-excited).

Each of the above methods of excitation is amenable to either normal CW, pulsed or Burst Mode operation, in which the pulses are applied to the discharge volume in a series of bursts, each burst being separated from the next burst by sufficient time for the laser plasma to relax.

### Radio Frequency Excitation

In the RF excited version of Fig. 2 many parallel gain media slots 28 are created by mounting a number of hollow RF electrodes 24 within a common hermetic chamber 26 filled with an appropriate CO₂ laser gas mixture, well known in the art. The hollow interiors 22 of the electrodes 24 provide water cooling of the electrodes 24. In the case of hollow electrodes, the electrode end plates 16 shown in Fig. 1, and the ceramic spacers 18 where appropriate, are provided with interior channels to provide fluid communication between the water cooling ring 14 and the interiors of the electrodes 24.

In the common RF power source configuration illustrated in Fig. 1, each electrode is electrically connected to only one mounting end plate and insulated from the other by a ceramic spacer 18. Electrical connection of each alternate electrode is made to the opposite end mounting plate. That is, assuming each pair of electrodes is formed from a first and second electrode, then the end plates include a first electrode plate at a first end of the laser system, a second electrode plate at a second end of the laser system; and each of the first electrodes is electrically connected to one of the first and second electrode plates and each of the second electrodes is electrically connected to the other of the first and second electrode plates. One end plate is then electrically connected to the ground return side, outer-coaxial cable conductor, from a standard high frequency (typically 40 to 100 MHZ) radio frequency generator. The other end plate is connected to the RF power feed inner co-axial cable conductor. In this manner a low inductance, multiple, parallel-channel inter-digital discharge electrode system is achieved; which provides very uniform RF power deposition within the individual discharge slots.

Complete RF shielding for the laser assembly can be achieved by fabricating the outer hermetic enclosure from a good electrical conductor such as Aluminum, and using it as the co-axial return RF line for the structure. Use of electrodes alternately connected to one or the other end plate requires an even number of discharge channels. It is, however, possible to use an odd number of discharge channels, but then opposite faces of a single electrode would need to be insulated from each other (so that the electrode sequence could have the correct polarity). That is, with four discharge channels, there would be four electrodes having a total of eight faces defining the four discharge channels. Thus there would be two positive electrodes and two negative electrodes. For three discharge channels each of the three "electrodes" would have to have faces having opposite polarity so that the sequence of faces could retain the plus/minus sequence.

By maintaining a relatively small gap (typically 2 to 5 mm) between the water-cooled aluminum electrodes one can achieve effective diffusion cooling of the multiple gain volumes without the need for gas transport. Thus a compact, lightweight and extended volume RF excited laser gain media can be achieved. In the initial demonstration device the individual slots were made 50 cm. long and 3 cm. wide and with a 5 mm gap. With this geometry and under an input power loading of about 1kW per slot the small signal gain and saturation parameters were found to be about 0.5%/cm. and 2kW/cm² respectively. At a power loading of about 2kW per slot the device of Fig. 1 should deliver an output optical power of between 1.5 and 2 kW per module.

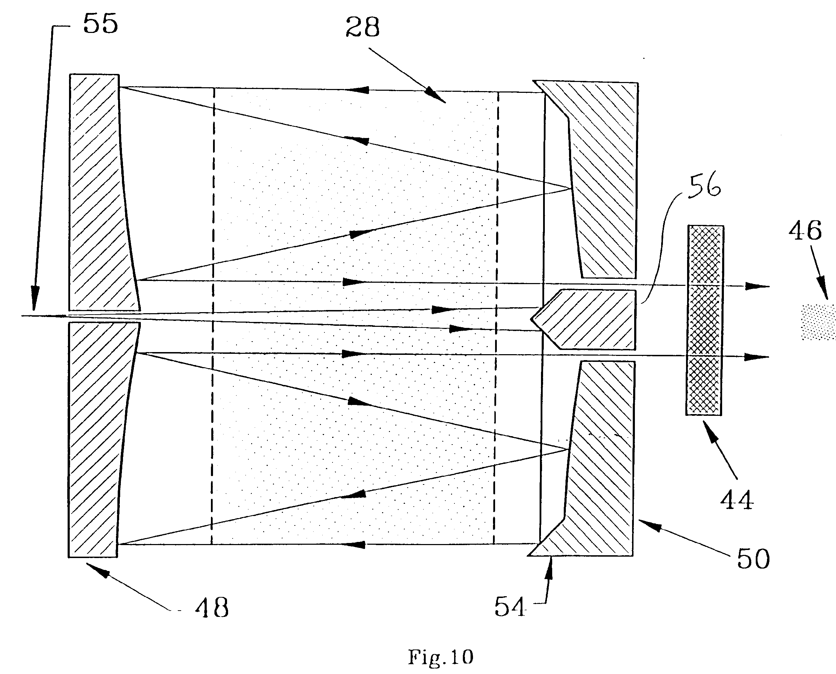

However much longer and wider geometries with many more radial gain slots can be used to increase the attainable power. Fig. 11 is a cross-sectional view of a radial geometry having 24 discharge slots. The diameter of the enclosure shown may be in the order of 30 cm. The gain module and laser system corresponding to this structure are illustrated in Fig. 12. As shown, co-axial cables 57 provide rf excitation to the electrodes 24 through electrode mounting end plates similar to those shown in Fig. 1, but in Fig. 12 two Fig. 1 assemblies have been mounted in a back-to-back configuration to give a longer gain module, as confined within enclosure 72. Flanges 70 provide for serial connection of similar gain units.

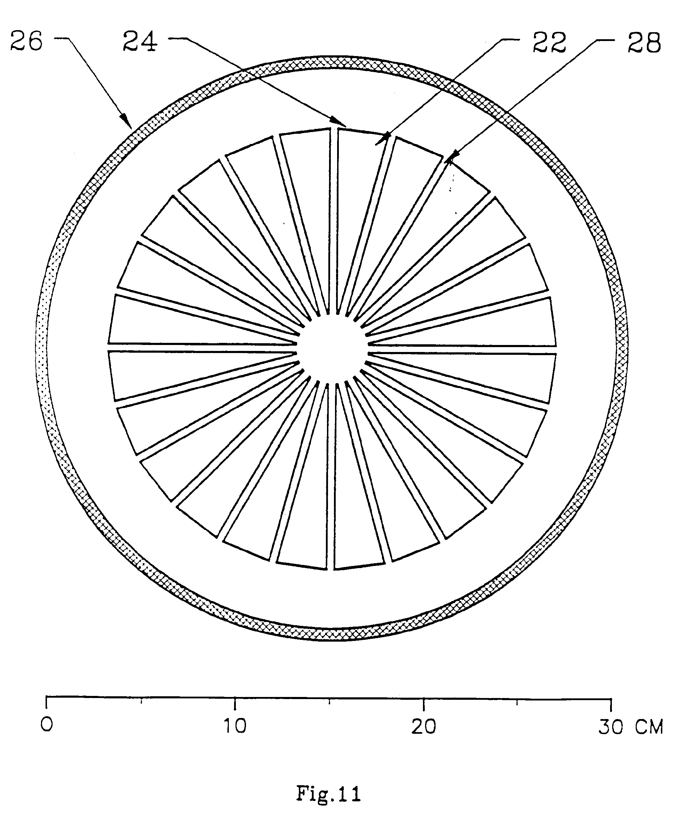

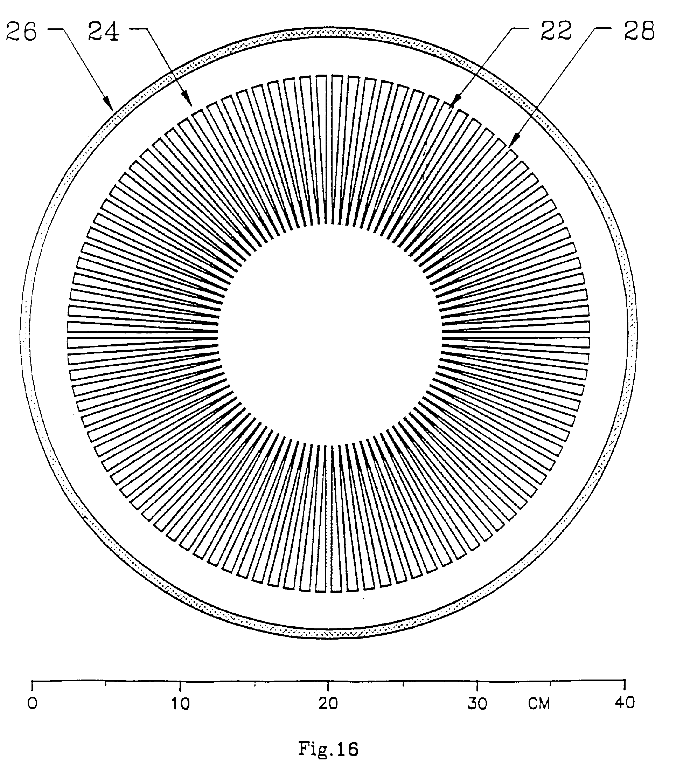

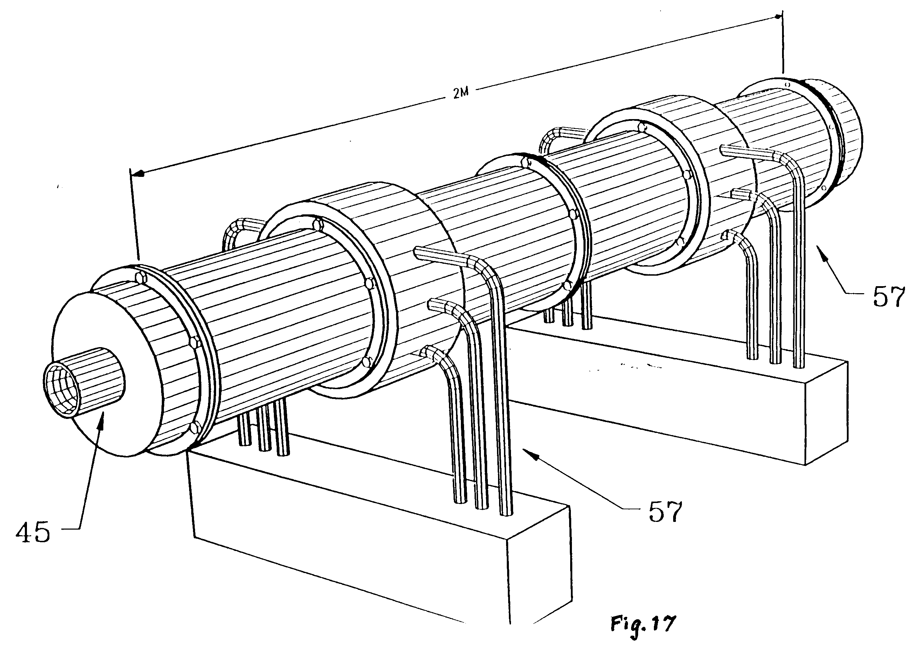

Figs. 13, 15 and 16 depict radial discharge geometries having 48, 60 and 100 parallel gain regions. These discharge structures would provide laser devices having optical outputs well beyond 100 Kw. By connecting such units in series, as shown in Fig. 17 (supporting structure not shown), laser systems of still much higher output power can be realized. In Figs. 14 and 17, the laser enclosure is seen in perspective showing in particular the output window 45 for the laser output beam 46.

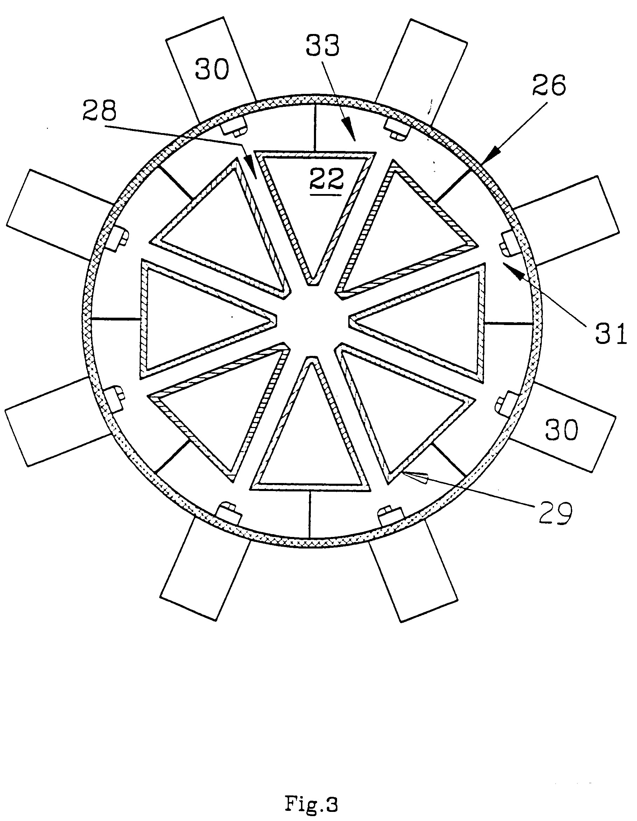

Fig. 3 shows a cross-sectional schematic of a microwave excited CO₂ laser. The excited slot gain regions 28 (also referred to as discharge channels or ridged waveguide gaps or gain media) are shown in a radial geometry about a central axis perpendicular to the figure. The ridged waveguides 29 are made, for example, of aluminum, and form the boundaries of the discharge regions 28 and the open sided ring waveguide resonator 33. Microwave excitation is provided by magnetrons 30 attached to the outer hermetic envelope 26 and having magnetron output coupling 31 disposed on the inside of the hermetic envelope 26. As is known in the art, the magnetrons are commonly available (as used for example in microwave ovens).

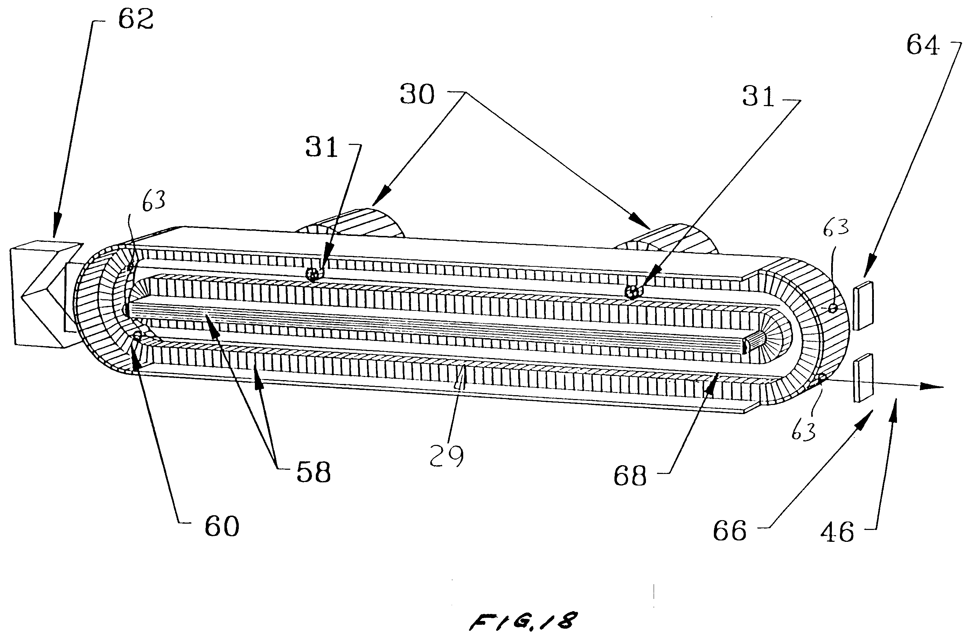

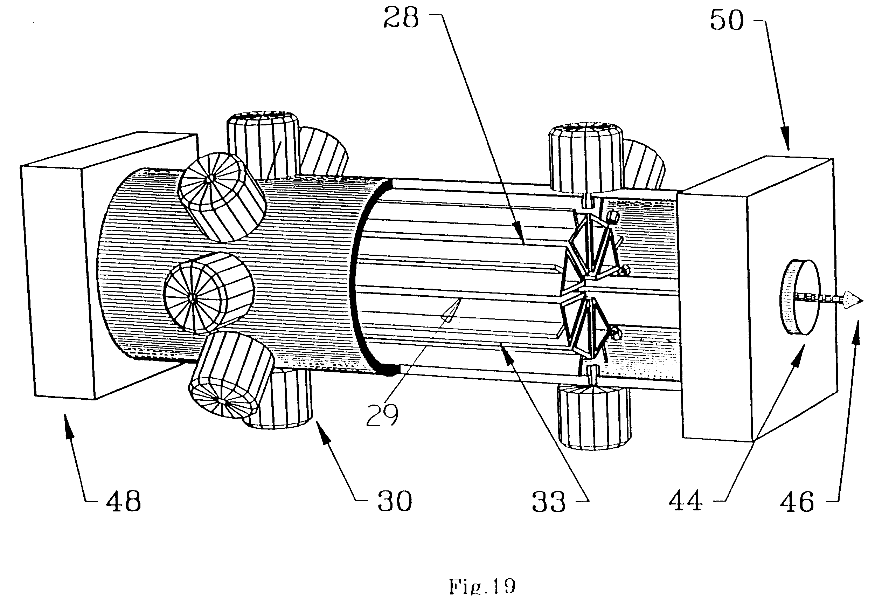

In past experiments featuring gigahertz frequency excitation of a CO₂ laser mixture, the microwave technique and apparatus utilized were not conducive to an optimization of the laser's geometry. Also past approaches were not convenient or sufficiently compact for scaling into the multikilowatt regime of optical power extraction. These aspects of the technology, of particular importance in robotic or space applications, have been addressed through adoption of a unique ridged-waveguide travelling-wave structure depicted in Figs. 18 and 19.

### Travelling Wave Resonator Geometry

In order to negate the problems of non-uniform excitation along the laser's active length caused by creation of microwave standing waves in the laser discharge channel, a problem often encountered in R.F. excited lasers and in previous attempts using microwave excitation, a microwave ring-resonator geometry has been selected. The basic concept illustrated schematically in Fig. 18 employs a continuous double ridged aluminum waveguide 58 to act both as the microwave energy conduit as well as the laser's excitation system and gas envelop. The waveguide is formed from a first continuous ridged electrode defining a first ridge and forming a first ring, the first ridge being formed on the inside of the first ring and a second continuous ridged electrode defining a second ridge and forming a second ring inside the first ring, the second ridge opposing the first ridge. The first and second ridges define a narrow-gap discharge channel 68 between them and the first and second electrodes thereby forming a continuous double ridged waveguide.

Means connected to the first and second electrodes for pumping microwave laser excitation energy into the discharge channel and for creating a laser plasma in the discharge channel is formed by having magnetrons 30 coupled directly into the wall 31 of the ridged waveguide structure. The ridged waveguide structure therefore serves as both ring microwave resonator and laser chamber.

Optical extraction means for extracting laser optical energy from the narrow-gap discharge channel is provided by a convenient double-pass gain media for optical energy extraction as depicted in Fig. 18, which consists of an optical folding prism 62 with cavity mirrors 64 and 66. Mirror 64 is preferably a totally reflecting mirror, and mirror 66 is preferably a partially reflecting mirror. The reflectivity of the mirrors may be adjusted for the particular output desired by well known methods in the art. Holes 63 in the ridges allow the laser energy to escape the double-ridged waveguide. Propagation modes of microwave energy and construction of double ridged aluminum waveguides are known in the art and need not be described here.

The utilization of a double ridged-waveguide structure is a particularly important concept, since the ridged geometry confines nearly 100% of the travelling microwave energy into the narrow volume defined by the double-ridge gap. The travelling waveguide microwave resonator also prevents non-uniform excitation of the laser gas volume due to standing waves or microwave field attenuation, as has been experienced using other approaches.

Consequently, a very high mode filling factor can be achieved, since both the laser plasma and the optical cavity are well defined and constrained to exist only within this narrow gap region 68. Such a condition also allows for effective heat transfer to the water-cooled metallic guide walls, thereby providing for a concomitant increase in the laser's operational efficiency.

In this manner, a light weight and compact structure is obtained, which provides for complete utilization of all the microwave power generated.

To increase the average power level of the machine, it is desirable to couple additional magnetrons 30 into the side wall of the waveguide, in a linear phased array or directional travelling wave manner.

One may also use a magnetic field to stabilize the plasma in the microwave excited ridged waveguide structure of Fig. 18 by placing a row of small permanent magnets down either side of each waveguide ridge. This feature, known as magnetic stabilization, permits an even more uniform and increased discharge power loading into the travelling wave structure, through the **LORENTZ JxB** interaction.

### Radial Microwave Geometry

To extend the extractable laser power well into the multikilowatt range, the microwave laser geometry shown in Fig. 19 is utilized. In essence the unit is very similar to the construction of Fig. 1, being comprised of a number of parallel open-sided, water cooled, microwave ring resonator structures 33 built into a radial pattern. Each slot 28 again contributes to a ridged waveguide travelling wave, which now encompasses the series microwave path lengths of all the slots.

Since the path length in paired slots 28 should be equal transversely across each ridged waveguide, the end of the waveguides 33 should be flared at each end (not shown) to give equal path length for microwaves travelling in the waveguide. Cooling of the electrode faces in this embodiment, as with the other embodiments, is obtained by passing cooling fluid through the hollow interiors of the electrodes. Since the electrodes form an enclosed ring, the cooling fluid is best supplied to the ring through hoses separately connected to the electrodes, rather than through an end plate as shown in Fig. 1.

As in the case of the RF excited radial geometry, each gain slot of this microwave excited system may share a common optical mode of an unstable resonator, as illustrated previously in Figs. 5 through 7. Thus, resonator mirrors 48 and 50 constituting retro and output optical systems are also constructed as shown in Figs. 5, 6, 7, 8, 9, and 10.

### Magpie Excitation

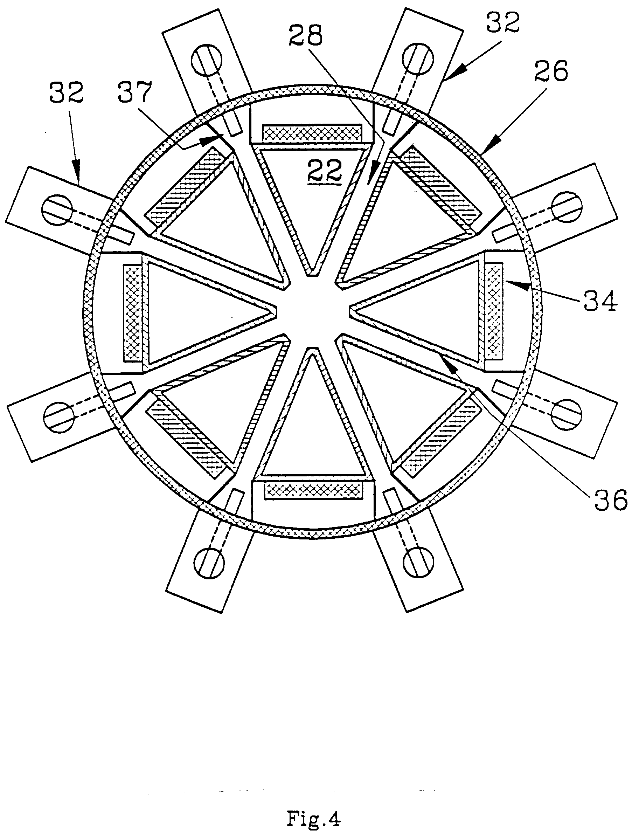

The PIE excitation and magnetic stabilization approaches can be utilized either singly or in combination, to provide an efficient method for laser plasma excitation, and may be effectively used to provide a high power MAGPIE ZODIAC CO₂ laser, as illustrated in Fig. 4.

In Fig. 4, fluid ballasted multi-element electrodes 32 are arranged in alternate polarity linear arrays fitted through the wall of a hermetic gas enclosure 26. The multiple discharge channels 28 are arranged in a radial configuration. A line of permanent magnets 34 capable of producing a magnetic field strength of several hundred gauss across the end of the fluid ballasted pin electrodes 32 are arranged between the discharge channels 28.

Water-cooled heat exchangers 23 serve both to define the gain media and to provide diffusion cooling of the laser plasma within these discharge slots. A high temperature, thermally conducting, but electrically insulating coating (not shown but covers the surface of the heat exchangers 23 as shown at 36) is used to completely encapsulate the heat exchangers 23, and inside of the hermetic enclosure 26, to prevent shorting-out of the discharge slots.

In operation, the repetitive, high frequency application of sequential photoionization and impulse avalanching processes to the fluid-ballasted, multi-element electrodes are used to generate uniform ionization of the gas gain media within the slots. Main vibrational pumping is accomplished independently of plasma ionization, through a non-sustained DC field impressed across the hollow cathode pin tips 37. This sequence of events constitutes the basic PIE excitation process, as described in, H.J.J. Seguin, et. al., "The Photo-initiated, Impulse-enhanced, Electrically-excited (PIE) Discharge for High Power CW Laser Applications", Appl. Phys. Letts. Vol.32, pp.418-420, 1978, all of which is incorporated herein by reference.

In this manner the best E/N ratio within the discharge regions can be maintained, so as to provide optimization of the laser's excitation efficiency. The permanent magnets labelled 34 are included in the design to give enhanced discharge stability and uniformity, via the influence of induced JxB Lorentz forces upon the electron and ion sheaths at the pin electrode surfaces. Further description of the MAGPIE excitation is found in:
A.K. Nath, H.J.J. Seguin, et. al., "Optimization Studies of a Multikilowatt PIE CO₂ Laser", IEEE J. Quantum. Electron. Vol. QE-22, pp.268, 1986;
S.K. Nikumb, H.J.J. Seguin, et. al., "Burst-mode Gain Switched Technique for High Peak and Average Power Optical Energy Extraction", Appl. Opts. Vol.28, pp.1624-1627, May., 1989;
H.J.J. Seguin, C.E. Capjack, et. al., "High Power Laser Discharge Stabilization With Magnetic Fields", Appl. Phys. Lett. Vol.37, pp.130-133, 1980;
C.E. Capjack, H.J.J. Seguin, et., al., "A Magnetically Stabilized Coaxial Laser Discharge", Appl. Phys. B. Vol.26, pp.203-205, 1981;
H.J.J. Seguin, et. al., U.S. Patent No. 4,604,752, Canadian Patent No. 1,189,604;
V.A. Seguin, H.J.J. Seguin, et. al., "Electrical Characteristics of a MAGPIE Coaxial Laser Discharge System", J. Appl. Phys. Vol.57, pp. 4954-4961, 1985; and
W.L. Nighan, "Electron Energy Distributions and Collision Rates in Excited N2,CO2 and CO, Phys. Rev.A, Vol.2., pp.1989-2000, Nov., 1970.

As in the two previous cases of RF and Microwave excitation, the MAGPIE radial or Zodiac laser geometry can employ any of the optical extraction resonator systems illustrated in Figs. 5 through 10.

### Alternative Embodiments

The radial geometry of the laser systems shown is scalable up and down, so that dimensions of 2 cm diameter and 15 cm length for the enclosure are believed to be possible. For such a small device, it may be desirable to use a partially transmitting output mirror in the optical extraction configuration of Fig. 6. In this manner, a larger aperture phase locked output beam of superior optical quality may be realized.

## Claims

1. A laser system having plural pairs of parallel electrodes (24, 32) defining plural narrow-gap discharge channels (28), cooling means (14, 20) attached to the electrodes for cooling the electrodes (24, 32), excitation means (30, 34, 57) attached to the electrodes for providing laser excitation energy to the electrodes (24, 32), whereby application of laser excitation energy to the electrodes (24, 32) creates a laser plasma in the discharge channels (28), wherein:
the discharge channels (28) are arranged about and extend radially from a common central axis; and have optical extraction means (38, 40, 42, 48, 50, 51, 52, 53, 54, 55, 56, 66) having a second central axis coinciding with the first common central axis disposed about the discharge channels (28) for creating a common resonator mode for all of the discharge channels and for extracting laser energy from all of the discharge channels simultaneously.

2. The laser system of claim 1 in which the optical extraction means includes an optical resonator (38, 40) having a common unstable cavity mode and an annular output, and further including an output compacting axicon (42) mounted to receive the annular output.

3. The laser system of claim 1 in which the optical extraction means includes an optical resonator (38, 40) having a common unstable cavity mode and an annular output, the resonator (38, 40) being continuous across the common central axis, thereby providing for phase locking of the plural discharge channels.

4. The laser system of claim 1 in which the optical extraction means includes a retro-reflective toric unstable resonator.

5. The laser system of claim 1 in which the optical extraction means includes a toric unstable resonator (48, 50) including means (52, 53) for feeding back a portion of the output into the plural discharge channels (28) to provide phase locking of the plural discharge channels.

6. The laser system of claim 1 in which the optical extraction means includes an unstable resonator (48, 50) having means to allow injection of a laser beam (55) along the common central axis.

7. The laser system of claim 1 in which the optical extraction means includes a toric unstable resonator (48, 50) with output taken at the common central axis.

8. The laser system of claim 1 in which the pairs of adjacent discharge channels (28) are coupled to form ring microwave resonators.

9. The laser system of claim 8 in which the pairs of adjacent discharge channels (28) form continuous double ridged waveguides (29).

10. The laser system of any of claims 1-7 in which the laser system has a first end and a second end, and each pair of electrodes includes a first electrode and a second electrode and further comprising:
a first electrode mounting plate (16) at the first end of the laser system;
a second electrode mounting plate (16) at the second end of the laser system; and
each of the first electrodes being electrically connected to one of the first and second electrode mounting plates (16) and each of the second electrodes being electrically connected to the other of the first and second electrode plates.

11. The laser system of any of claims 1-7 and 10 in which each of the first and second electrodes are triangular in cross-section and excited by radio-frequency energy.

12. The laser system of claim 11 in which the number of plural discharge channels (28) is an even number and each triangular electrode defines the electrode faces for two adjacent discharge channels (28), one on each side of the triangular electrode.

## Patentansprüche

1. Lasersystem mit einer Mehrzahl von Paaren paralleler Elektroden (24, 32), die eine Mehrzahl von Entladungskanälen (28) mit geringen Zwischenabständen definieren, sowie mit einer Kühleinrichtung (14, 20), die zum Kühlen der Elektroden (24, 32) an diesen angebracht ist, und mit einer Erregungseinrichtung (30, 34, 57), die an den Elektroden angebracht ist, um die Elektroden (24, 32) mit Lasererregungsenergie zu versorgen, wobei die Zufuhr von Lasererregungsenergie an die Elektroden (24, 32) ein Laserplasma in den Entladungskanälen (28) erzeugt, wobei:
die Entladungskanäle (28) um eine gemeinsame Mittelachse herum angeordnet sind und sich radial von dieser Achse erstrecken; und mit einer optischen Extraktionseinrichtung (38, 40, 42, 48, 50, 51, 52, 53, 54, 55, 56) mit einer zweiten Mittelachse, die mit der ersten gemeinsamen Mittelachse zusammenfällt und um die Entladungskanäle (28) herum angeordnet ist, um für alle Entladungskanäle einen gemeinsamen Resonatormodus zu erzeugen und um gleichzeitig von allen Entladungskanälen Laserenergie zu extrahieren.

2. Lasersystem nach Anspruch 1, dadurch gekennzeichnet, daß die optische Extraktionseinrichtung einen optischen Resonator (38, 40) mit einem gemeinsamen instabilen Hohlraummodus und eine ringförmige Ausgabe umfaßt, und ferner mit einer Ausgabe-Verdichtungseinrichtung (42), die so angebracht ist, daß sie die ringförmige Ausgabe empfängt.

3. Lasersystem nach Anspruch 1, dadurch gekennzeichnet, daß die optische Extraktionseinrichtung einen optischen Resonator (38, 40) mit einem gemeinsamen instabilen Hohlraummodus und eine ringförmige Ausgabe umfaßt, wobei der Resonator (38, 40) ununterbrochen auf der gemeinsamen Mittelachse vorhanden ist, wodurch bezüglich der Mehrzahl von Entladungskanälen eine Phasenverriegelung vorgesehen wird.

4. Lasersystem nach Anspruch 1, dadurch gekennzeichnet, daß die optische Extraktionseinrichtung einen rückstrahlenden, torischen, instabilen Resonator umfaßt.

5. Lasersystem nach Anspruch 1, dadurch gekennzeichnet, daß die optische Extraktionseinrichtung einen torischen, instabilen Resonator (48, 50) umfaßt, der eine Einrichtung (52, 53) zur Rückkopplung eines Teils der Ausgabe in die Mehrzahl von Entladungskanälen (28) umfaßt, um eine Phasenverriegelung der Mehrzahl von Entladungskanälen vorzusehen.

6. Lasersystem nach Anspruch 1, dadurch gekennzeichnet, daß die optische Extraktionseinrichtung einen instabilen Resonator (48, 50) umfaßt, der eine Einrichtung aufweist, die es ermöglicht, daß ein Laserstrahl (55) entlang der gemeinsamen Mittelachse gestrahlt werden kann.

7. Lasersystem nach Anspruch 1, dadurch gekennzeichnet, daß die optische Extraktionseinrichtung einen torischen, instabilen Resonator (48, 50) umfaßt, wobei die Ausgabe an der gemeinsamen Mittelachse entnommen wird.

8. Lasersystem nach Anspruch 1, dadurch gekennzeichnet, daß die Paare benachbarter Entladungskanäle (28) so gekoppelt sind, daß sie einen Ring-Mikrowellenresonator bilden.

9. Lasersystem nach Anspruch 8, dadurch gekennzeichnet, daß die Paare benachbarter Entladungskanäle (28) einen kontinuierlichen Doppelsteghohlleiter (29) bilden.

10. Lasersystem nach einem der Ansprüche 1 bis 7, dadurch gekennzeichnet, daß das Lasersystem ein erstes Ende und ein zweites Ende aufweist, und wobei jedes Elektrodenpaar eine erste Elektrode und eine zweite Elektrode aufweist, ferner umfassend:
eine erste Elektrodengrundplatte (16) an dem ersten Ende des Lasersystems;
eine zweite Elektrodengrundplatte (16) an dem zweiten Ende des Lasersystems; und wobei
jede erste Elektrode elektrisch mit einer der ersten und zweiten Elektrodengrundplatten (16) verbunden ist, und wobei jede zweite Elektrode elektrisch mit der anderen der ersten und zweiten Elektrodengrundplatten verbunden ist.

11. Lasersystem nach einem der Ansprüche 1 bis 7 und 10, dadurch gekennzeichnet, daß die ersten und zweiten Elektroden einen dreiecksförmigen Querschnitt aufweisen, und wobei die Elektroden durch Hochfrequenzenergie erregt werden.

12. Lasersystem nach Anspruch 11, dadurch gekennzeichnet, daß es sich bei der Anzahl der Mehrzahl von Entladungskanälen (28) um eine gerade Anzahl handelt, und wobei jede dreiecksförmige Elektrode die Elektrodenflachen für zwei benachbarte Entladungskanäle (28) bildet, und zwar je eine auf jeder Seite der dreiecksförmigen Elektrode.

## Revendications

1. Système de laser comportant plusieurs paires d'électrodes parallèles (24, 32) définissant plusieurs canaux de décharge (28) à entrefer étroit, des moyens de refroidissement (14, 20) attachés aux électrodes pour refroidir les électrodes (24, 32), des moyens d'excitation (30, 34, 57) attachés aux électrodes pour fournir l'énergie d'excitation du laser aux électrodes (24, 32), l'application de l'énergie d'excitation du laser aux électrodes (24, 32) créant un plasma laser dans les canaux de décharge (28), dans lequel :
les canaux de décharge (28) sont disposés autour d'un axe central commun et s'étendent radialement à partir de celui-ci ; et ont des moyens d'extraction optiques (38, 40, 42, 48, 50, 51, 52, 53, 54, 55, 56, 66) ayant un second axe central coïncidant avec le premier axe central commun disposé autour des canaux de décharge (28) pour créer un mode résonateur commun pour tous les canaux de décharge et pour extraire l'énergie laser de tous les canaux de décharge simultanément.

2. Système de laser selon la revendication 1, dans lequel les moyens d'extraction optiques comprennent un résonateur optique (38, 40) ayant un mode de cavité instable commun et une sortie annulaire, et comprenant en outre un axicon (42) de compactage de sortie monté de façon à recevoir la sortie annulaire.

3. Système de laser selon la revendication 1, dans lequel les moyens d'extraction optiques comprennent un résonateur optique (38, 40) ayant un mode de cavité instable commun et une sortie annulaire, le résonateur (38, 40) étant continu le long de l'axe central commun, de façon à fournir un blocage de phase des différents canaux de décharge.

4. Système de laser selon la revendication 1, dans lequel les moyens d'extraction optiques comprennent un résonateur instable torique rétroréfléchissant.

5. Système de laser selon la revendication 1, dans lequel les moyens d'extraction optiques comprennent un résonateur instable torique (48, 50) comprenant des moyens (52, 53) pour réalimenter une partie de la sortie dans les différents canaux de décharge (28) afin d'obtenir un blocage de phase des différents canaux de décharge.

6. Système de laser selon la revendication 1, dans lequel les moyens d'extraction optiques comprennent un résonateur instable (48, 50) ayant des moyens permettant l'injection d'un faisceau laser (55) le long de l'axe central commun.

7. Système de laser selon la revendication 1, dans lequel les moyens d'extraction optiques comprennent un résonateur instable torique (48, 50) dont la sortie est prise à l'axe central commun.

8. Système de laser selon la revendication 1, dans lequel les paires de canaux de décharge adjacents (28) sont couplés pour former des résonateurs annulaires micro-ondes.

9. Système de laser selon la revendication 8, dans lequel les paires de canaux de décharge adjacents (28) forment des guides d'ondes continus (29) à double moulure.

10. Système de laser selon l'une quelconque des revendication 1 à 7, dans lequel le système laser a une première extrémité et une seconde extrémité, et chaque paire d'électrodes comprend une première électrode et une seconde électrode, et comprenant en outre :
une première plaque de montage d'électrode (16) à la première extrémité du système laser ;
une seconde plaque de montage d'électrode (16) à la seconde extrémité du système laser ; et
chacune des premières électrodes étant reliée électriquement à l'une des première et seconde plaques de montage d'électrode (16) et chacune des secondes électrodes étant reliée électriquement à l'autre des première et seconde plaques de montage d'électrodes.

11. Système de laser selon l'une quelconque des revendications 1 à 7 et 10, dans lequel chacune des premières et secondes électrodes est de section triangulaire et est excitée à une énergie de fréquence radio.

12. Système de laser selon la revendication 11, dans lequel le nombre des différents canaux de décharge (28) est un nombre pair et chaque électrode triangulaire forme les faces d'électrodes de deux canaux de décharge adjacents (28), un sur chaque côté de l'électrode triangulaire.
